# EUROPEAN PATENT APPLICATION

(11) **EP 3 412 919 A1**
(43) Date of publication of application: **12.12.2018**
(21) Application number: 17747359.2
(22) Date of filing: 31.01.2017
(51) Int. Cl.: F04D 29/70, B01D 46/26, B01D 46/52, F24F 7/00, F24F 13/28

(54) **AIR CLEANER, HUMIDIFIER, AND DEODORIZING MACHINE**

(30) Priority: 05.02.2016 JP 2016020786
(71) Applicant: Kankyo Co., Ltd., Nankoku-shi, Kochi 783-0004 (JP)
(72) Inventor: IKE, Hidetoshi, Nankoku-shi Kochi 783-0004 (JP)
(74) Representative: Kremer, Simon Mark
(86) International application number: PCT/JP2017/003262
(87) International publication number: WO 2017/135203

(57) **Abstract**

There are disclosed a novel air cleaner of which the air-cleaning ability per unit volume is improved as compared to conventional air cleaners, and which operates with less power consumption in the case where the novel air cleaner has the same level of performance as a conventional air cleaner; and a humidifier and a deodorizing machine which include the same. The air cleaner includes a disc; a motor for rotating the disc; a filter A which is cylindrical as a whole, which is provided on the disc, and which surrounds an inner-side region including a rotational center of the disc, the filter A being bent into wave-shape such that irregularities of the wave are formed in radial direction of the disc; and at least one type of air resistor which is provided on the disc and provided on either an inner side or an outer side, or both inner and outer sides of the filter A.

## Description

### Technical Field

The present invention relates to an air cleaner, a humidifier, and a deodorizing machine.

### Background Art

Conventionally, there are known various types of air cleaners utilizing fans and filters. The principle of these air cleaners is that air is forcibly fed into a filter by using a fan and is caused to pass through the filter, thereby causing the filter to capture dust, etc. in the air and cleaning the air. In usual cases, air cleaners that are widely used are of the type in which the fan and filter are completely separated and wind is blown onto the filter by the fan. In addition, Patent document 1 proposes an air cleaner in which a side wall portion of a cylindrical sirocco fan is composed of a filter, and a vane wheel is rotated to pass an air flow through the filter from the inside toward the outside of the cylinder to clean the air.

The inventors of the present application previously found that by making a filter bent into wave-shape and rotating the filter itself, the filter can have both functions of the vanes of the vane wheel and the filter, and found that this can make the size of the air cleaner smaller than the size of a conventional air cleaner if the level of performance is equal between these air cleaners. The inventors filed a patent application for an air cleaner and a humidifier based on this principle (patent document 2). Furthermore, the inventors found that, in the air cleaner and humidifier of the previously filed application, the efficiency of the air cleaner and humidifier can be further enhanced by forming the filter with an electrically conductive material, providing a high-voltage electrode at a specific position, and applying a voltage between the filter and the high-voltage electrode. The inventors obtained a patent on the air cleaner and humidifier based on this principle (Patent document 3).

### Prior Art References

Patent Documents

Patent document 1: JP 8-206436 A
Patent document 2: JP 2001-120933 A
Patent document 3: JP 3350031 B

### Summary of Invention

Problem to be Solved by Invention

An object of the present invention is to provide a novel air cleaner whose air-cleaning ability per unit volume is improved as compared to the air cleaner of Patent document 3, and which operates with less power consumption in the case where the novel air cleaner has the same level of performance as the air cleaner of Patent document 3, and a humidifier and a deodorizing machine which include the same.

### Means for Solving Problems

As a result of tremendous research effort, the inventor found the following and completed the present invention. In the air cleaner disclosed in Patent document 3, an air resistor, which rotates together with a disc, is provided on the disc, and thereby a wind occurs by the air resistor and the amount of air passing through the filter can be increased. Thereby, the efficiency of air cleaning is enhanced, and, in turn, the power consumption can be decreased.

Specifically, the present invention provides an air cleaner comprising:
a disc;
means for rotating the disc;
a filter A which is cylindrical as a whole, which is provided on the disc, and which surrounds an inner-side region including a rotational center of the disc, the filter A being bent into wave-shape such that irregularities are formed in radial direction of the disc; and
at least one type of air resistor which is provided on the disc and provided on either an inner side or an outer side, or both inner and outer sides of the filter A.

In addition, the invention provides an air humidifier comprising the air cleaner of the invention, wherein moisture is retained in at least the filter A in the air cleaner.

Furthermore, the invention provides an air deodorizing machine comprising the air cleaner of the invention, wherein a deodorizing component is retained in at least the filter A in the air cleaner.

### Advantageous Effects of Invention

The air cleaner of the present invention has a higher air cleaning efficiency than known air cleaners. Therefore, the power consumption can be decreased when the same level of performance is exhibited.

### Brief Description of Drawings

FIG. 1 is an exploded perspective view of a cylindrical filter in one embodiment of the present invention.
FIG. 2 is a perspective view of the cylindrical filter illustrated in FIG. 1.
FIG. 3 is a cross-sectional view of a bridging band formed of a hot-melt adhesive at distal ends of projection portions on the inside of the filter in one embodiment of the invention.
FIG. 4 is a cross-sectional view of the bridging formed of a comb-shaped sheet at the distal ends of the projection portions on the inside of the filter in one embodiment of the invention.
FIG. 5 is a perspective view of cylindrical filters which are stacked and bonded to increase the height in one embodiment of the invention.
FIG. 6 is a cross-sectional view of a filter with alternate long and short bend widths in one embodiment of the invention.
FIG. 7 is an exploded perspective view of a disc including cylindrical filters A and B in one embodiment of the invention.
FIG. 8 is a perspective view of the disc including the cylindrical filters A and B in one embodiment of the invention.
FIG. 9 is an exploded perspective view of a disc including cylindrical filters A and B and vanes in one embodiment of the invention.
FIG. 10 is a perspective view of the disc including the cylindrical filters A and B and vanes in one embodiment of the invention.
FIG. 11 is a cross-sectional view of the peripheral edge portion of the disc including the cylindrical filters A and B and vanes in one embodiment of the invention.
FIG. 12 is a cross-sectional view of the peripheral edge portion of the disc including cylindrical filters A and B, with vanes provided on the outside, in one embodiment of the invention.
FIG. 13 is a perspective view of a disc including a cylindrical filter A with a large width and vanes with a large width in one embodiment of the invention.
FIG. 14 is an exploded perspective view of an air cleaner which is one embodiment of the invention.
FIG. 15 is a perspective view of the air cleaner illustrated in FIG. 14.
FIG. 16 is a cross-sectional view of the air cleaner illustrated in FIG. 14 and FIG. 15.
FIG. 17 is an exploded perspective view of cylindrical filters A and B and an open-cell foam structure in one embodiment of the invention.
FIG. 18 is a perspective view of the cylindrical filters A and B and open-cell foam structure in one embodiment of the invention.
FIG. 19 is a cross-sectional view of the cylindrical filters A and B and open-cell foam structure in one embodiment of the invention. Mode for Carrying out Invention

As described above, an air cleaner of the present invention comprises a disc, means for rotating the disc, and a filter A which is cylindrical as a whole, which is provided on the disc, and which surrounds an inner-side region including a rotational center of the disc, the filter A being bent into wave-shape such that irregularities are formed in radial direction of the disc.

In the description below, the terms "above", "below", "upper", "lower", "upward" and "downward" indicate a positional relationship in the case in which the disc is horizontally held, and does not indicate the positional relationship at the time of use.

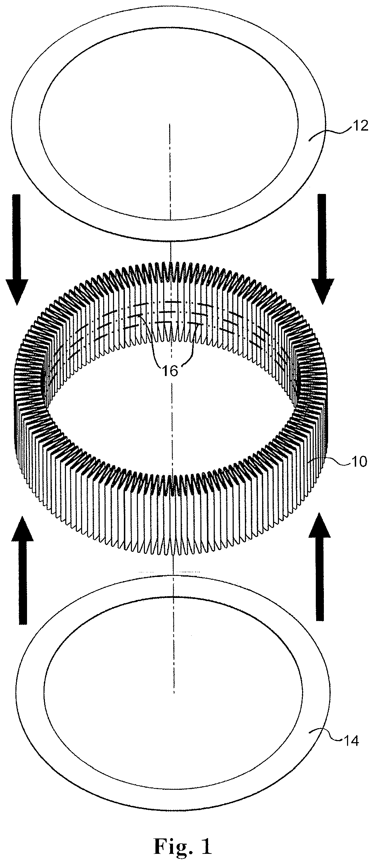

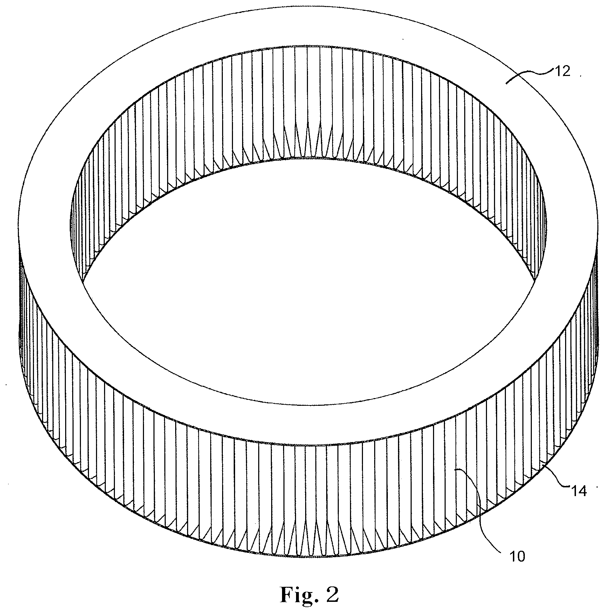

FIG. 1 illustrates an exploded perspective view of one embodiment of a filter A which is cylindrical as a whole, and FIG. 2 illustrates a perspective view of the same. In FIG. 1 and FIG. 2, numeral 10 denotes a filter A which is bent into wave-shape. Numeral 12 denotes an upper end plate fixed to the top portion of the filter A 10, and 14 denotes a lower end plate fixed to the bottom portion of the filter A 10. The upper end plate 12 and lower end plate 14 are not indispensable, but are preferable since these parts exhibit the effect of preventing deformation of the filter A due to centrifugal force at a time of rotation. The phrase "cylindrical as a whole" (hereinafter, may also be simply referred to as "cylindrical") means that, as seen from FIG. 2, if the wavy filter is not microscopically viewed as having a wavy shape, but is macroscopically viewed, the filter is cylindrical with a thickness in an inward-and-outward direction (in the example of FIG. 2, a cylindrical shape including the upper end plate 12 as the top surface and the lower end plate 14 as the bottom surface).

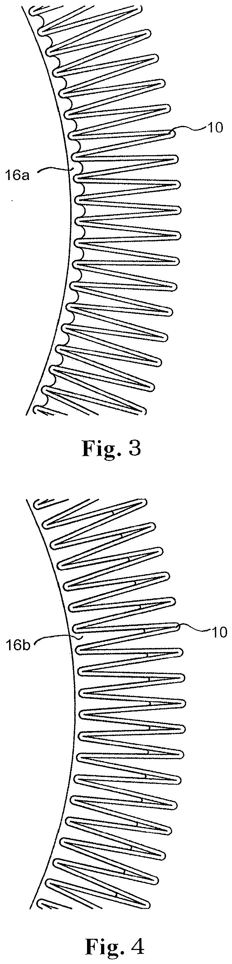

The filter A 10 surrounds an inner-side region including the rotational center of the disc (to be described later) and has a shape bent into wave-shape such that irregularities are formed in the radial direction of the disc. This shape itself is known as disclosed in Patent document 2 and Patent document 3. FIG. 3 and FIG. 4 illustrate partially enlarged views of preferred embodiments of the filter A 10.

In order to prevent deformation at a time of rotation of the wavy filter A, the respective top portions on the inside of the filter A 10 (the rotational center side of the disc) may be bridged by a bridging band 16. The pitch of edge lines of the top portions of the filter is fixedly set at about 1 to 10 mm, preferably about 2 to 5 mm, by the bridging band. In the embodiment illustrated in FIG. 3, the respective top portions on the inside of the wavy filter A 10 are bridged by a hot-melt adhesive layer 16a which is the bridging band 16 (FIG. 1). The width (the width in the up-and-down direction) of this hot-melt adhesive layer is normally about 1 to 3 mm, and preferably about 2 mm. In the embodiment illustrated in FIG. 4, the respective top portions on the inside of the wavy filter A 10 (the rotational center side of the disc) are bridged by a comb-shaped sheet 16b which is the bridging band. The comb-shaped sheet 16b can be formed of paper, polypropylene, polystyrene, polyethylene, etc., for example, with a thickness of about 0.2 to 1.5 mm, preferably about 0.7 mm. Alternatively, the top portions on the inside of the wavy filter A 10 may be bridged by a sheet (not shown) with a width of about 1 to 10 mm, preferably 2 mm, in which a sheet with a relatively low melting point (about 80 to 150°C), such as a hot-melt adhesive or polyethylene with a thickness of about 0.2 to 1 mm, preferably 0.5 mm, is laminated on a sheet of paper, polypropylene, polystyrene, polyethylene, etc., with a thickness of about 0.2 to 1.5 mm, preferably 0.7 mm, which is the bridging band. The number of such bridging bands may be one. However, in order to effectively prevent deformation at a time of rotation of the filter A 10, it is preferable to provide a plurality of bridging bands (for example, four to ten bridging bands when the height of the filter is about 80 to 200 mm). When a plurality of bridging bands are provided, the interval of bridging bands is normally about 10 mm to 30 mm. Incidentally, when the diameter of the filter is small and the rotational speed is low, deformation of the filter A hardly occurs even if the bridging band is not provided.

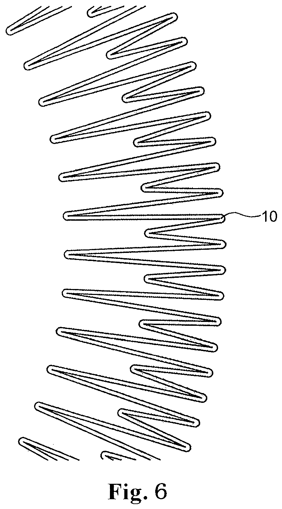

The widths of bendings of the filter A 10 may be uniform as illustrated in FIG. 3 and FIG. 4, or may be alternately large and small as illustrated in FIG. 6. If the widths of bendings of the filter are alternately made large and small as illustrated in FIG. 6, the opening area of the recess part of the filter can be increased, and therefore a decrease in air cleaning effect due to an increase in air resistance at this part can be suppressed.

Each of the upper end plate 12 and lower end plate 14 may be, for example, a laminate of paper or a plastic sheet, such as polypropylene, polystyrene, polyethylene, etc., for example, with a thickness of about 0.2 to 1.5 mm, preferably 0.7 mm, and a sheet with a relatively low melting point (about 80 to 150°C), such as a hot-melt adhesive or polyethylene with a thickness of about 0.2 to 1 mm, preferably 0.5 mm. By pressing a hot plate, the hot-melt adhesive or low-melting-point sheet is melted, and end portions of the filter A 10 and the respective end plates are adhered. Note that even a single-layer sheet, which is not a laminated sheet, can be used as the end plate if the single-layer sheet is a polyethylene sheet with a thickness of about 0.5 to 1.5 mm, preferably 1 mm, and this end plate can be fixed to the filter A.

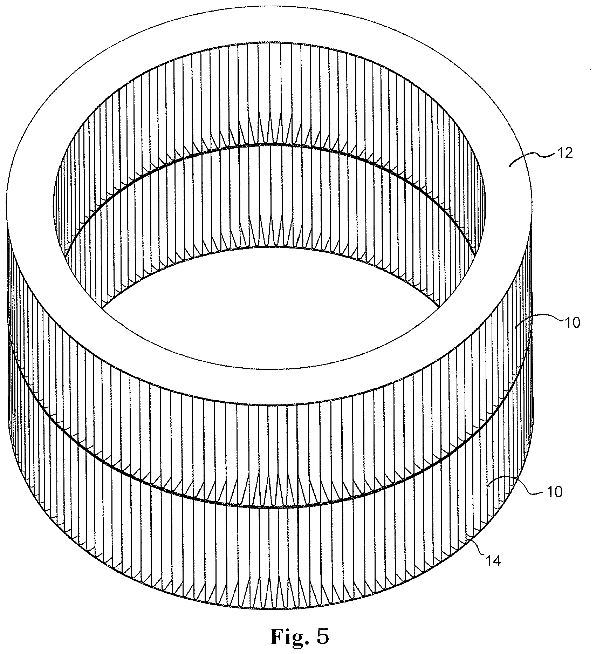

Each end plate, like the above-described bridging band, serves to prevent deformation at a time of rotation of the filter A. Thus, in place of the bridging band or together with the bridging band, a plurality of cylindrical filters A 10 illustrated in FIG. 2 can be stacked and used (FIG. 5).

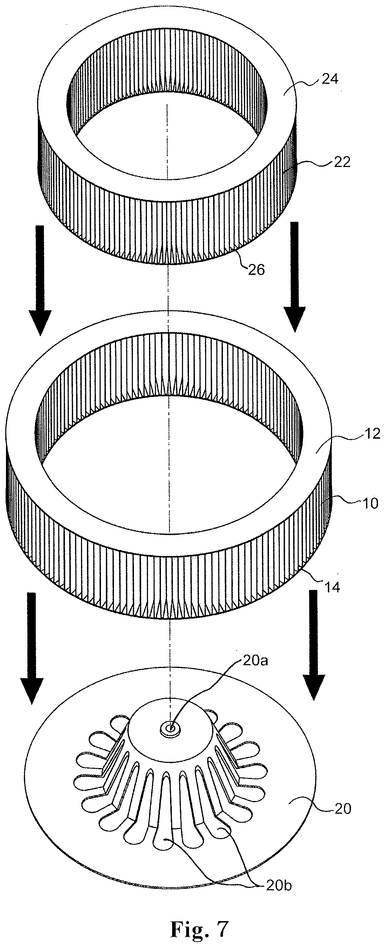

FIG. 7 is an exploded perspective view of a preferred embodiment of the present invention. As illustrated in FIG. 7, the above-described cylindrical filter A 10 is provided on a disc 20 (FIG. 7 illustrates a filter B, too, which will be described later). The filter A 10 is fixed to the disc 20. When the disc 20 rotates, the filter A 10 also rotates at the same time. As illustrated in FIG. 7, the filter A 10 surrounds an inner-side region including a rotational center 20a of the disc 20.

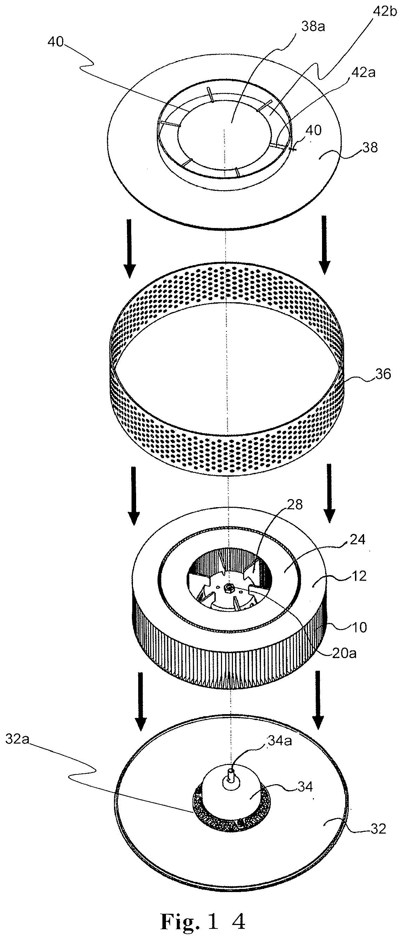

Preferably, the rotational center is the center of the circle of the disc, and the center of the filter A 10 agrees with the rotational center 20a of the disc 20. As illustrated in FIG. 7, a central portion of the disc 20, which includes the rotational center 20a, may protrude in a projection shape in order to receive a bearing of means (a motor or the like, not shown) for rotating the disc. A component having such a shape is also referred to the "disc" described in the present invention. For the passage of air, one or a plurality of opening portions 20b may be formed in the disc 20. The central side of the disc, which is rotating, has a negative pressure since air moves toward the outside by the rotation of an air resistor. Thus, if the openings 20b are present on the central side of the disc, air flows in via the openings 20b, and the amount of the wind increases, thereby enhancing the air cleaning effect. In this case, air is supplied from an air suction port 32a on the lower side of the disc 20 (FIG. 14).

In the air cleaner of the present invention, an air resistor is provided on the disc. The "air resistor" is a structure which, when rotating together with the disc, increases air streams flowing radially from the rotational center of the disc by the principle of a vane wheel. By providing the air resistor, the amount of the air flow passing through the filter A increases, and therefore the air cleaning efficiency can be enhanced.

The air resistor may be disposed on the inside of the filter A, or may be disposed on the outside of the filter A. When the air resistor is disposed on the inside, the air resistor serves as a vane wheel, and the air flow toward the filter A increases. Even when the air resistor is disposed on the outside of the filter A, air is sucked from the outside of the filter A by the principle of the vane wheel, and therefore the air flow toward the filter A increases too.

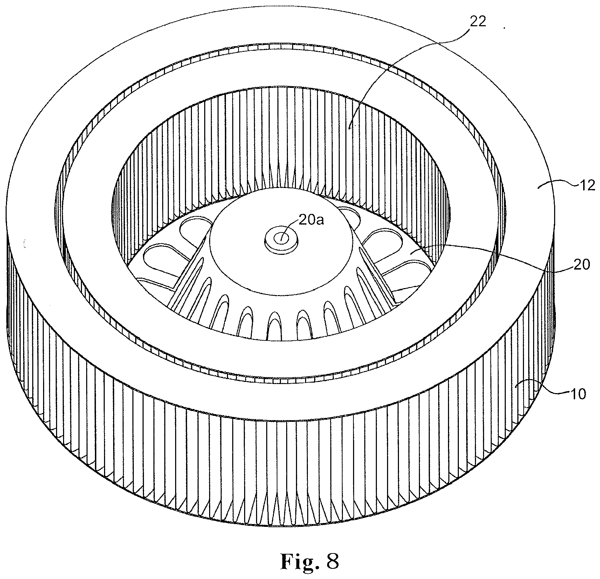

A preferable example of the air resistor is a cylindrical wavy filter B having the same structure as the filter A. The filter B is cylindrical as a whole, and is bent into wave-shape such that irregularities are formed in the radial direction of the disc. The filter B surrounds an inner-side region including the rotational center of the disc, and is provided in the inside of the filter A. FIG. 7 is an exploded perspective view of a preferred embodiment of an air cleaner including a filter B 22, and FIG. 8 is a perspective view of the same. Preferably, the filter B 22 has a similar shape to the filter A and is disposed coaxial with the filter A 10. Preferably, the filter B, like the filter A, includes an upper end plate 24 at the upper end portion thereof, and includes a lower end plate 26 at the lower end portion thereof. Note that the filter B has the same structure as the above-described filter A, and the description of the filter A applies to the filter B as such. Besides, a plurality of filters B may be provided.

When the filter B is provided inside the filter A, the filter B functions as a vane wheel and can increase the air flow toward the filter A. In this case, since the amount of air supplied to the filter A increases, the air cleaning efficiency becomes higher than in the case in which only the filter A is employed. Moreover, since the filter B itself is the filter, air is cleaned by the filter B itself, and therefore the air cleaning efficiency is further enhanced.

However, since air resistance occurs in the filter B when air passes through the filter B, there is a concern that, depending on conditions, the amount of air supplied to the filter A decreases and the total air cleaning efficiency deteriorates. Taking this into account, by making the air resistance of the inside filter B equal to or lower than the air resistance of the outside filter A, the air cleaning effect of the total filter unit (filter A and filter B) is enhanced. Specifically, the surface area of the filter is proportional to the diameter, if the height of the filter is the same. Accordingly, if the cylindrical filters A and B have the same height and same pitch of filter irregularities, the cylindrical filter B on the inside has a smaller surface area. In addition, the total area of opening of the filter recess part, which serves as an inlet when air flows into the filter, is also proportional to the diameter. Accordingly, if the cylindrical filters A and B have the same height and same pitch of filter irregularities, the cylindrical filter B on the inside has a smaller total area of opening of the recess part. When there is substantially no gap between the filters, the amount of air passing through each filter is substantially the same. Thus, when the materials of the outside filter A and inside filter B are identical, the air resistance becomes higher in the filter B, and the air cleaning effect of the filter unit as a whole is limited. In this case, as described above, by making the air resistance of the inside filter B equal to or lower than the air resistance of the outside filter A, the air cleaning effect of the total filter unit is enhanced. The air resistance can be lowered by using a filter with a greater mesh size.

Besides, if the height of the cylindrical filter B is lower than the height of the cylindrical filter A, air passes over the upper side of the cylindrical filter B and directly reaches the cylindrical filter A. By bypassing a part of the air in this manner, it is possible to prevent the high air resistance of the cylindrical filter B from lowering the air cleaning effect of the entire filter unit.

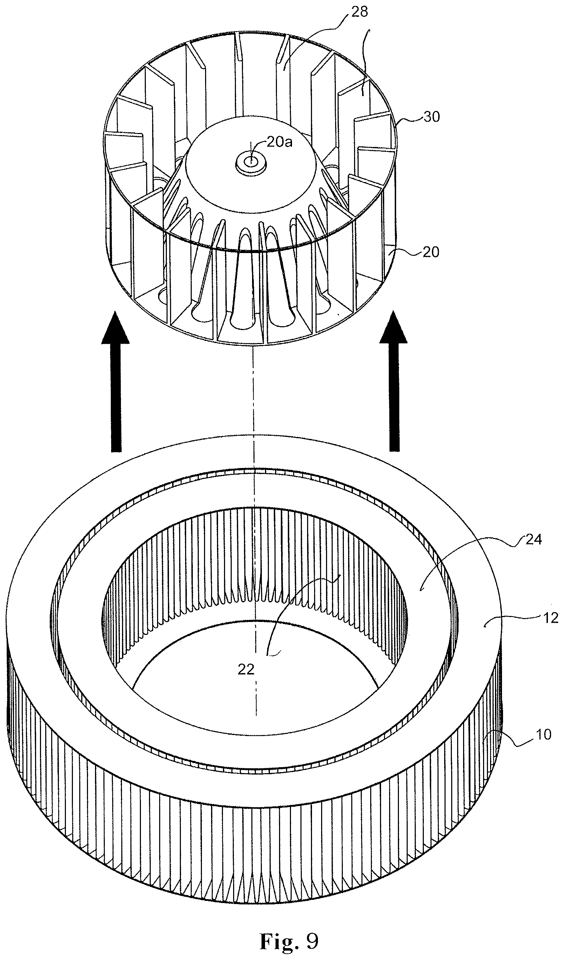

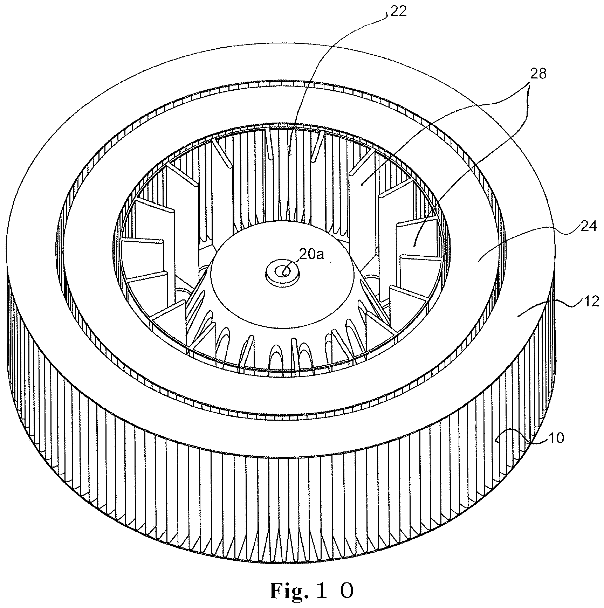

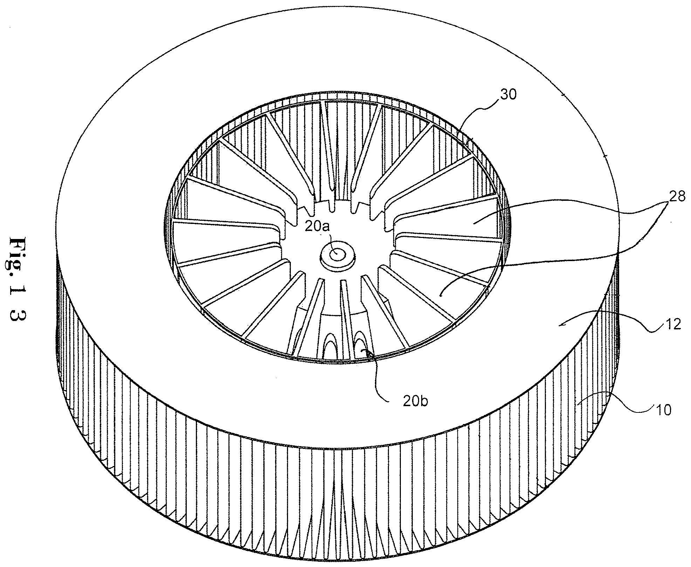

Another preferable example of the air resistor is one or a plurality of, preferably a plurality of, vanes provided on the disc. The vanes can be provided in place of the filter B (FIG. 13), or can be provided in addition to the filter B (FIG. 9 to FIG. 11).

FIG. 9 to FIG. 11 illustrate a preferred embodiment in which a plurality of vanes 28 are provided in the inside of the filter B. The vanes 28 are radially arranged around the rotational center 20a of the disc 20, and are disposed between the foot of the projecting portion of the disc 20 and the filter B 22. It is preferable to arrange the vanes 28 substantially equidistantly around the rotational center 20a, and, for example, when the outside diameter is about 500 mm, to arrange about four to 300 vanes 28. Since the vanes 28 are also fixed to the disc, the vanes also rotate as the disc rotates. In a preferred embodiment, the vanes 28 and disc 20 are molded integrally. A ring 30 for preventing outward deformation due to centrifugal force at a time when the disc rotates is formed integral with the vanes 28 at the distal ends of the vanes 28, which are on the opposite side to the disc 20. The cylindrical filter B 22 and cylindrical filter A 10 are attached in the named order toward the outside of this disc 20. As regards the method of attachment, the lower end plate covers a range from the outer edge of the filter A 10 to the inner edge of the filter B 22, and further overlaps the disc 20, and at this overlapping portion, the filter B 22 and filter A 10 are adhered. Although the sides of the filters A and B, which are opposite to the side of attachment to the disc 20, are fixed by the two upper end plates 12 and 24, those sides may be fixed together by a single end plate.

In this embodiment, by the rotation of the vanes 28, the air flow that is supplied to the filter B 22 increases by the principle of the vane wheel, and, in turn, the air cleaning efficiency increases.

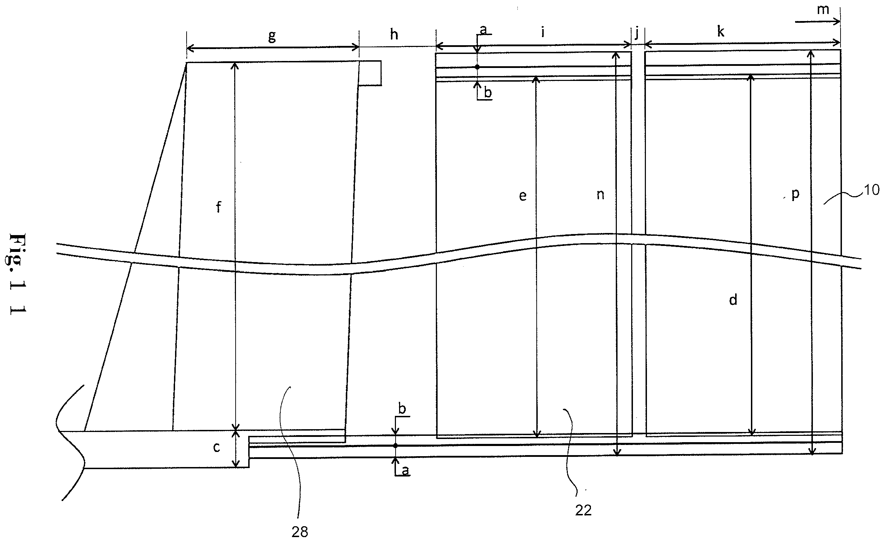

FIG. 11 is a partial schematic cross-sectional view of this embodiment. Symbols indicate dimensions such as plate thickness, height and width. Specifically, the symbols indicate the following:
a is the thickness of an end plate of a sheet of paper or plastic such as polypropylene, polystyrene, polyethylene, etc., the thickness being about 0.2 to 1.5 mm, preferably 0.7 mm;
b is the thickness of an end plate of a sheet with a relatively low melting point (about 80 to 150°C) such as a hot-melt adhesive or polyethylene, etc., the thickness being about 0.2 to 1 mm, preferably 0.5 mm;
c is the thickness of the disc, which is about 1 to 3 mm, preferably 2 mm;
d and e are the height of filters, which is about 5 to 500 mm, preferably about 80 to 200 mm;
f is the height of the vane, which is about 5 to 500 mm, preferably about 80 to 200 mm;
g is the width of the vane, which is about 5 to 300 mm, preferably about 60 to 150 mm;
h is a gap between the vane and filter, which is about 0 to 50 mm, preferably about 5 to 10 mm;
i and k are the width of filters, which is about 10 to 100 mm, preferably about 20 to 40 mm;
j is a gap between the filters, which is about 0 to 50 mm, preferably about 5 to 10 mm; and
m is the outside diameter of the filter unit, which is about 50 to 1000 mm, preferably about 200 to 500 mm.

The reason why the disc and filter overlap the layer indicated by the thickness b is that the layer of b is melted by heat at a time of melt-bonding, and the disc and filter bite into the layer. The vane indicated by the height f and width g has a parallelogrammatic shape because of a draft at a time of injection molding. The shape of the vane is not limited to a parallelogrammatic flat plate. The shape of the vane may be trapezoidal as indicated by a line of a left end of the vane in FIG. 11, or may be, not a flat plate shape, but a curved shape like a vane of a general sirocco fan. As regards the direction, the vane does not need to extend along a radial line about the rotational shaft, and may be inclined to the radial line.

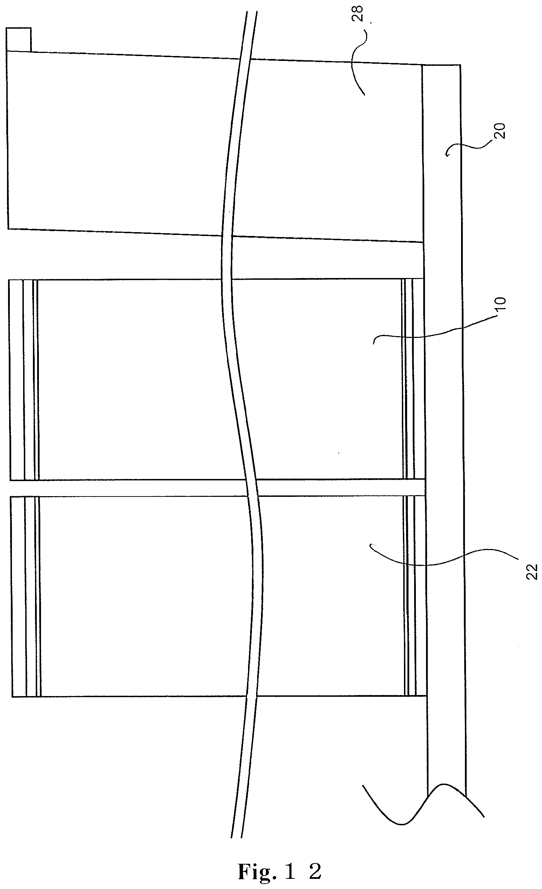

FIG. 12 is a partial schematic cross-sectional view of an embodiment in which the vanes 28 are disposed on the outside of the filter A 10. In this manner, the vanes 28 may be disposed on the peripheral edge of the disc 20 on the outside of the filter A 10. In this case, when the vanes 28 rotate together with the disc 20, the vanes 28 suck air from the central side of the disc 20 by the principle of the vane wheel, and the amount of the air passing through the filter B 22 and filter A 10 increases, and, in turn, the air cleaning efficiency is enhanced.

FIG. 13 illustrates an embodiment in which the filter B is not provided, and a plurality of vanes 28 are provided immediately inside the filter A 10. When the vanes 28 are provided in this manner, the filter B may be omitted.

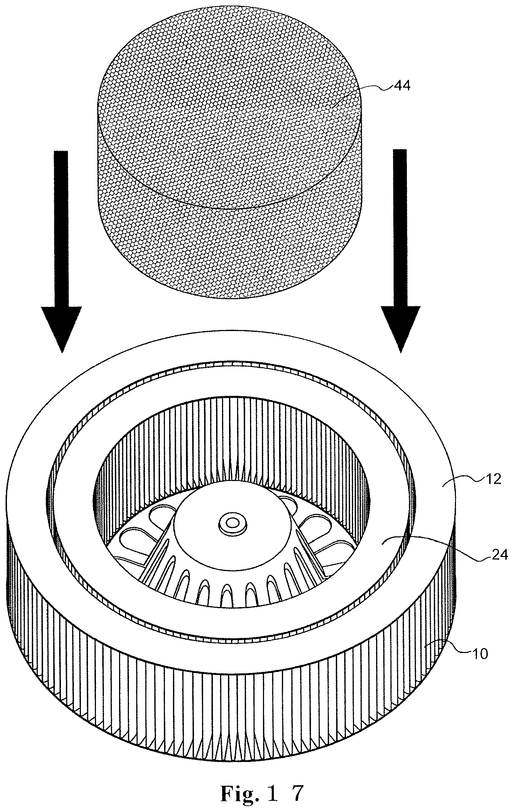

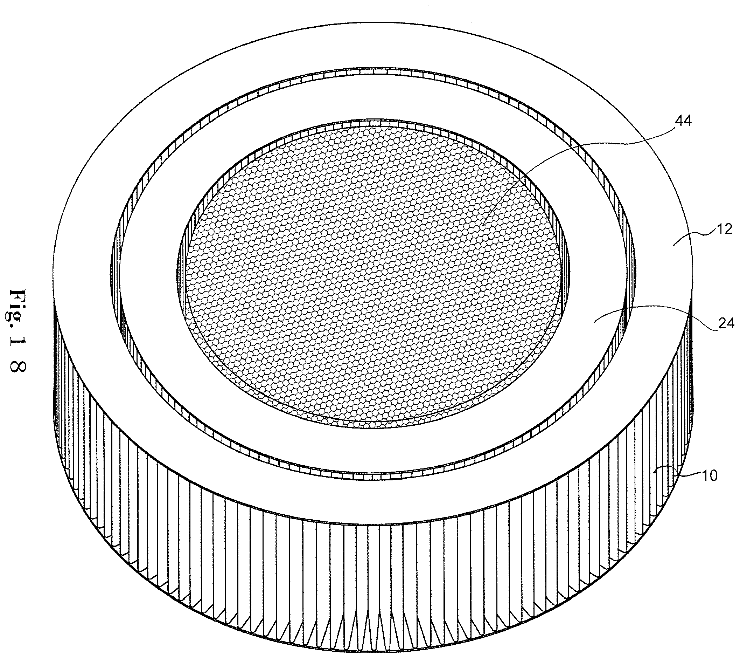

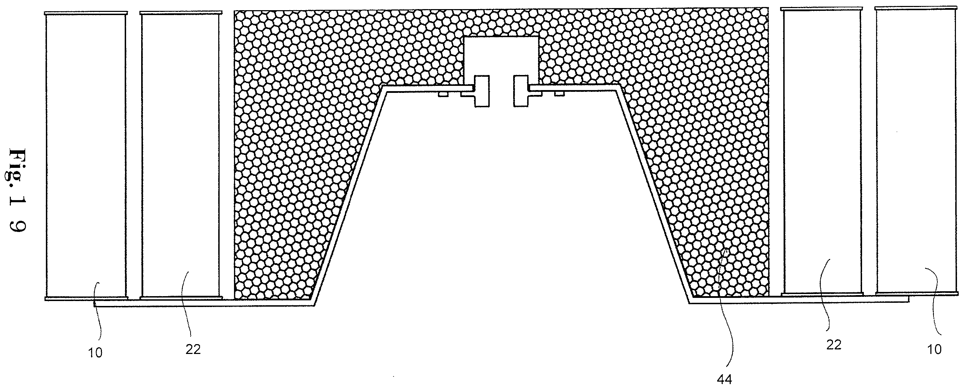

Another preferable example of the air resistor is an open-cell foam structure provided on the disc. FIG. 17 to FIG. 19 illustrate a preferred embodiment in which an open-cell foam structure 44 is provided in the inside of the filter B 22. The open-cell foam structure is a structure which is, like a urethane foam or natural sponge, composed of many cells, and the cells are connected such that gas can path through the structure. In FIG. 18 and FIG. 19, the outer peripheral surface of the open-cell foam structure 44 is spaced apart from the inner peripheral surface of the filter B 22. However, the outer peripheral surface of the open-cell foam structure 44 may be put in contact with the inner peripheral surface of the filter B 22. In addition, although the top surface of the open-cell foam structure 44 is on the same level with the top surface of the filter B 22, the top surface of the open-cell foam structure 44 may be recessed below or raised above the top surface of the filter B 22.

A preferable material of the open-cell foam structure 44 is urethane foam, or a material in which activated carbon or carbon black is kneaded in urethane foam or attached on the surface of urethane foam. Note that although the open-cell foam structure 44 is depicted by a honeycomb pattern in the Figures, this is simply a symbol in the drawing of the Figures and does not illustrate a concrete shape.

In another preferable mode of the invention, a high-voltage electrode for performing corona discharge may be provided. Specifically, this mode includes a high-voltage electrode, and means for applying a voltage between the high-voltage electrode and at least one of the disc, the filter A and at least one type of air resistor. In addition, the high-voltage electrode continuously performs corona discharge between the high-voltage electrode and at least one of the disc, filter A and at least one type of air resistor. By the corona discharge, air to be cleaned, which is present in the inside space of the filter unit, passes through the filter after passing through the discharge space. Thereby, dust included in the air to be cleaned is electrified and tends to easily adhere to the filter, and thus the air cleaning effect is further enhanced. Such means for electrifying dust and adhering the dust to the filter can exhibit a high dust-collecting efficiency even if the mesh size of the filter is increased. Therefore, this means is effective when the mesh size of the filter B is increased and the air resistance of the filter B is made lower than the air resistance of the filter A.

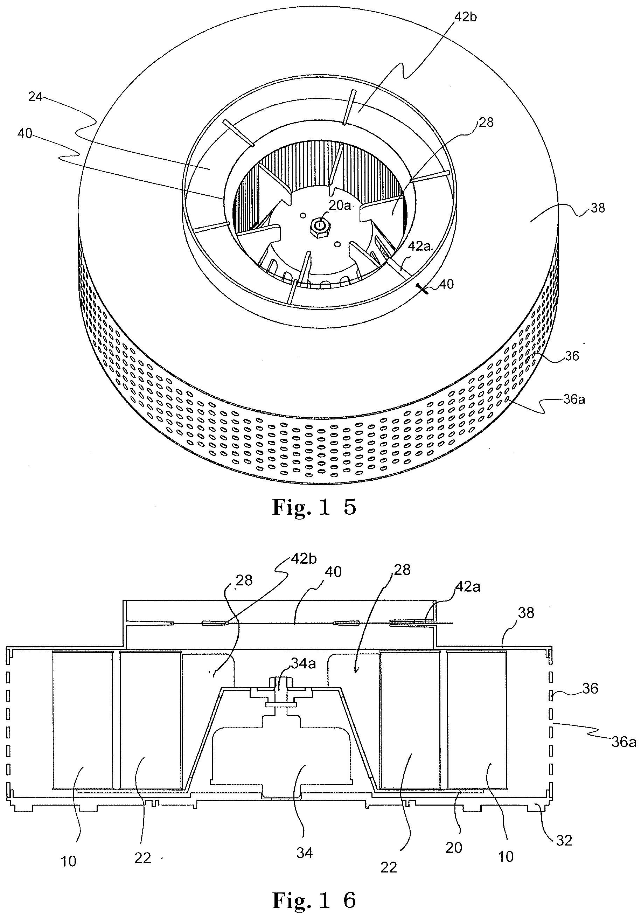

FIG. 14 is an exploded perspective view of a preferred embodiment of the invention which includes the filter A, filter B, vanes and high-voltage electrode, FIG. 15 is a perspective view of the same, and FIG. 16 is a schematic cross-sectional view of the same. In FIG. 14, numeral 32 denotes a base plate, and a motor 34 is mounted on the base plate 32. The motor 34 includes a rotational shaft 34a. This rotational shaft 34a is fixed to the rotational center 20a of the disc 20. When the rotational shaft 34a rotates, the disc and the filter A, filter B and vanes 28 mounted on the disc rotate. A cylindrical cover 36, in which many through-holes (exhaust holes) are provided, is mounted on the base plate 32. Since the cover 36 is mounted on the base plate 32, the cover 36 does not rotate even when the disc 20 rotates. A donut-shaped top cover 38 is mounted on an end face of the cover 36. The top cover 38 has an opening in its central part, and an edge portion of the opening extends upward in a cylindrical shape. A through-hole 42a for passing the line-shaped high-voltage electrode 40 is provided in this cylindrical portion. The high-voltage electrode 40 (preferably a gold-plated tungsten wire with a diameter of 50 to 100 µm), which is passed through the through-hole 42a from the outside toward an air suction hole 38a side, passes successively through through-holes 42b of five columns which have the through-holes 42b at distal ends in the air suction hole 38a (FIG. 14) that is the opening portion of the top cover 38. Then, the high-voltage electrode 40 extends out of the through-hole 42a, and thus the high-voltage electrode 40 is disposed in a ring shape. It is desirable that the center of the ring of the high-voltage electrode and the center of rotation be on the same rotational axis. Note that the high-voltage electrode 40 in FIG. 16 is illustrated in a state in which the high-voltage electrode 40 was passed through the through-hole 42a and bent toward the depth side of the drawing sheet of FIG. 16, and has just been passed through three through-holes 42b.

The high-voltage electrode 40 is configured such that a positive or negative high voltage of about 2 to 20 kV can be applied from a high voltage generator (not shown) to the high-voltage electrode 40. The disc 20, or the upper end plate 12 or 24, or the filter A or B functions as an earth electrode which performs corona discharge between the earth electrode and the high-voltage electrode 40.

When the disc 20 is the earth electrode, the disc 20 itself may have electrical conductivity, or a conductive material may be printed or coated on a discretionarily chosen range on the surface of the disc 20. A part with electrical conductivity of the disc 20 is successively electrically connected to a nut of a bearing, a motor shaft, a motor bearing and a motor casing, and is grounded from the motor casing via a board (not shown) (FIG. 16).

When the upper end plate 12 or 24 is the earth electrode, the end plate itself may have electrical conductivity, or a conductive material may be printed or coated on a discretionarily chosen range on the surface of the end plate. A part with electrical conductivity of the end plate is successively electrically connected to a path of the conductive coating, the nut of the bearing, the motor shaft, the motor bearing and the motor casing, and is grounded from the motor casing via the board (not shown) (FIG. 16). When the filter A or filter B is the earth electrode, the filter fiber itself may have electrical conductivity, or pulverized activated carbon with electric conductivity may be retained in the filter. A part with electrical conductivity of the filter is successively electrically connected to a path of the conductive coating, the nut of the bearing, the motor shaft, the motor bearing and the motor casing, and is grounded from the motor casing via the board (not shown) (FIG. 16).

When the open-cell foam structure 44 is the earth electrode, the open-cell foam structure may have electrical conductivity, or a conductive material may be printed or coated on a discretionarily chosen range on the surface of the open-cell foam structure. A part with electrical conductivity of the open-cell foam structure is successively electrically connected to a path of the conductive coating, the nut of the bearing, the motor shaft, the motor bearing and the motor casing, and is grounded from the motor casing via the board (not shown).

When the air cleaner of this embodiment is used, the motor is rotated. Thereby, the filter unit (filters A and B) and vanes are rotated, a high-voltage generator is caused to generate a high voltage, and a potential is imparted to the high-voltage electrode 40. The rotational speed of the motor is not particularly limited, and is properly selected in accordance with the shape of the filter and the size of the device. Normally, the rotational speed is about 50 to 3000 rpm, and is preferably about 100 to 1000 rpm. Then, a wind occurs by the air resistor such as the filter and vanes, and air existing in the inner space of the filter unit, which is surrounded by the air resistor such as the filter and vanes, is blown out from air exhaust holes 36a of the cover 36 through the air resistor such as the filter and vanes. At the same time, air is sucked in from the air suction hole 38a of the top cover 38 and the air suction port 32a of the base plate 32.

Thereby, dust in the air sucked from the air suction hole 38a of the top cover 38 and the air suction port 32a of the base plate 32 is electrified by corona discharge. When the air passes through the filter B and filter A, the dust is captured by the filter B and filter A, and cleaned air is blown out of the air exhaust holes 36a of the cover 36.

Note that, in each of the above embodiments, the base plate is parallel to the horizontal plane, but the base plate may be perpendicular to the horizontal plane. Although the air suction hole of the top cover 38 faces upward, the air suction hole of the top cover 38 faces downward when the air cleaner is attached to the ceiling.

The air cleaner of the present invention has been described above. By making at least the filter A in the air cleaner of this invention retain moisture or a deodorizing liquid, the air cleaner functions also as an air humidifier or an air deodorizing machine. Accordingly, the present invention also provides an air humidifier including the air cleaner of the invention, wherein moisture is retained in at least the filter A in the air cleaner, and an air deodorizing machine including the air cleaner of the invention, wherein a deodorizing component is retained in at least the filter A in the air cleaner. This can easily be achieved by, for example, spraying water or a deodorizing liquid in a shower-like manner from a tube (not shown) to the rotating filter. When the base plate is perpendicular to the horizontal plane, water or a deodorizing liquid can be retained in the filter by dropping the water or deodorizing liquid from the tube. Since the filter is rotating, the number of locations of spraying or dropping may be one. If this filter is used, air absorbs moisture while passing through the filter, or the deodorizing component of the filter absorbs an offensive odor in the air. Therefore, air cleaning, humidification and deodorization can be performed at the same time. In the structure of the present invention, three cylindrical filters can be used. By specifically using the three cylindrical filters for the air cleaning, humidification and deodorization, respectively, a higher-performance air cleaning/humidifying/deodorizing machine can be realized.

### Experimental Example

A comparative test of dust-collecting performance was conducted with respect to the air cleaner of Patent document 3 and a prototype machine (the embodiment illustrated in FIG. 14 to FIG. 16) of the present invention. As regards the cylindrical filter in the air cleaner of Patent document 3, the outside diameter is 310 mm, the inside diameter is 260 mm, and the height of the filter is 73 mm. As regards the cylindrical filter A of the prototype machine of the present invention, the outside diameter is 310 mm, the inside diameter is 234 mm, and the height of the filter is 73 mm. As regards the cylindrical filter B of the prototype machine, the outside diameter is 224 mm, the inside diameter is 148 mm, the height of the filter is 73 mm, the outer edge of the vane is present on a circumference of a circle of 138 mm, six vanes are provided at equally divided angles of 60°, and the height of the vane is 73 mm. If the dimensions of the prototype machine of the present invention are described with reference to FIG. 11, m = 310mm, k = 38mm, j = 5mm, i = 38mm, h = 5mm, g = 29mm, and p = 73mm. The air cleaner of Patent document 3 or the prototype of the invention was disposed at the center in a chamber of 4 m (width) × 4 m (depth) × 1.875 m (height) = 30 m³, and the chamber was filled with the smoke of cigarettes of 200 CPM. Then, the air cleaner of Patent document 3 or the prototype of the present invention was driven. The voltage applied to the high-voltage electrode was -16 kV.

The decreases of the smoke were compared. The time during which 160 CPM was halved to 80 CPM, and the power consumption at this time were 4.0 minutes and 80 Wh in the air cleaner of Patent document 3, and were 4.0 minutes and 40 Wh in the prototype of the present invention. In the air cleaner of Patent document 3 and the prototype of the present invention, the outside diameter of the cylindrical filter is equal, and the height of the cylindrical filter is equal. The time during which the smoke of cigarettes was halved from 160 CPM to 80 CPM was also equal. However, the power consumption of the prototype of the invention was half the power consumption of the air cleaner of Patent document 3.

The reason why the power consumption was halved is as follows. In the air cleaner of Patent document 3, the number of cylindrical filters, which function as fans, is only one, and thus the smoke was removed by processing a great amount of air by increasing the rotational speed. In the prototype machine of the present invention, the number of cylindrical filters is two, and this means that there are two fans. Thus, there is no need to greatly increase the rotational speed of the fan. Moreover, since the smoke is removed by the two-stage filter, the rate of removal is high, and the amount of air, which needs to be processed, is small. Reference Signs List

- 10: Filter A
- 12: Upper end plate
- 14: Lower end plate
- 16: Bridging band
- 20: Disc
- 22: Filter B
- 24: Upper end plate
- 26: Lower end plate
- 28: Vane
- 30: Ring
- 32: Base plate
- 34: Motor
- 36: Cover
- 38: Top cover
- 40: High-voltage electrode
- 42: Through-hole
- 44: Open-cell foam structure

## Claims

1. An air cleaner comprising:
a disc;
means for rotating the disc;
a filter A which is cylindrical as a whole, which is provided on the disc, and which surrounds an inner-side region including a rotational center of the disc, the filter A being bent into wave-shape such that irregularities of the wave are formed in radial direction of the disc; and
at least one type of air resistor which is provided on the disc and provided on either an inner side or an outer side, or both inner and outer sides of the filter A.

2. The air cleaner of Claim 1, wherein the air resistor is a filter B which is cylindrical as a whole, and which is bent into wave-shape such that irregularities of the wave are formed in radial direction of the disc, the filter B surrounding an inner-side region including the rotational center of the disc, and being provided in an inside of the filter A.

3. The air cleaner of Claim 2, wherein the air resistance of the filter B is equal to or lower than the air resistance of the filter A.

4. The air cleaner of Claim 1, wherein the air resistor is one or a plurality of vanes provided on the disc.

5. The air cleaner of Claim 2 or 3, further comprising, as an additional air resistor, one or a plurality of vanes provided on the disc.

6. The air cleaner of any one of Claims 1 to 3, wherein the air resistor is an open-cell foam structure which is provided in an inside of the filter A, or which is provided in an inside of the filter B when the filter B is provided.

7. The air cleaner of any one of Claim 6, wherein the air resistance of the open-cell foam structure is equal to or less than the air resistance of the filter A when the filter B is not provided, and is equal to or less than the air resistance of the filter B when the filter B is provided.

8. The air cleaner of any one of Claims 2 to 7, wherein one or a plurality of openings are provided near the rotational center of the disc and inside the filter A and the filter B.

9. The air cleaner of any one of Claims 1 to 8, further comprising:
an electrode; and
means for applying a voltage between the electrode and at least one of the disc, the filter A and the at least one type of air resistor,
wherein the electrode is configured to continuously perform corona discharge between the electrode and at least one of the disc, filter A and the at least one type of air resistor.

10. An air humidifier comprising the air cleaner of any one of Claims 1 to 9, wherein moisture is retained in at least the filter A in the air cleaner.

11. An air deodorizing machine comprising the air cleaner of any one of Claims 1 to 9, wherein a deodorizing component is retained in at least the filter A in the air cleaner.
